(19) Europäisches Patentamt
European Patent Office
Office européen des brevets

(11) **EP 2 278 891 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(21) Anmeldenummer: **09735670.3**

(22) Anmeldetag: **21.04.2009**

(51) Int Cl.:
*C13B 10/10* (2011.01)          *A23N 1/00* (2006.01)
*A23N 1/02* (2006.01)          *A23L 2/04* (2006.01)

(86) Internationale Anmeldenummer:
**PCT/EP2009/002886**

(87) Internationale Veröffentlichungsnummer:
**WO 2009/129991 (29.10.2009 Gazette 2009/44)**

(54) **VERFAHREN ZUR ELEKTROPORATION VON RÜBENSCHNITZELN UND VORRICHTUNG ZUR DURCHFÜHRUNG DIESES VERFAHRENS**

METHOD FOR ELECTROPORATION OF SLICED BEETS AND APPARATUS TO IMPLEMENT THE METHOD

PROCÉDÉ D'ÉLECTROPORATION DE COSSETTES DE BETTERAVE ET DISPOSITIF DE MISE EN OEUVRE DUDIT PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.04.2008 DE 102008020429**

(43) Veröffentlichungstag der Anmeldung:
**02.02.2011 Patentblatt 2011/05**

(73) Patentinhaber: **Südzucker Aktiengesellschaft Mannheim/Ochsenfurt**
**68165 Mannheim (DE)**

(72) Erfinder:
• **ARNOLD, Jochen**
**67551 Worms (DE)**
• **FRENZEL, Stefan**
**69469 Weinheim (DE)**
• **MICHELBERGER, Thomas**
**67269 Grünstadt (DE)**
• **SCHERER, Peter**
**67280 Ebertsheim (DE)**
• **SCHEUER, Timo**
**67551 Worms (DE)**
• **WEIBEL, Matthias**
**67280 Ebertsheim (DE)**

(74) Vertreter: **Schrell, Andreas et al**
**Gleiss Grosse Schrell & Partner**
**Patentanwälte Rechtsanwälte**
**Leitzstrasse 45**
**70469 Stuttgart (DE)**

(56) Entgegenhaltungen:
| | |
|---|---|
| **EP-A- 1 825 765** | **EP-A- 1 994 836** |
| **WO-A-2005/123967** | **DE-A1- 1 567 259** |
| **DE-A1- 10 144 479** | **DE-C- 960 260** |
| **US-A- 4 753 810** | **US-A- 5 747 088** |

**Beschreibung**

Die vorliegende Erfindung betrifft ein Verfahren zur verbesserten Extraktion und anschließenden Gewinnung von Inhaltsstoffen aus Pflanzenmaterial, insbesondere Zuckerrüben (*Beta vulgaris*) beziehungsweise aus Zuckerrübenschnitzeln. Weiterhin betrifft die vorliegende Lehre auch eine Anlage zur Durchführung des Verfahrens.

Um Inhaltsstoffe aus biologischen Materialien zu isolieren, ist es in der Regel notwendig, die Zellmembranen des biologischen Materials zu öffnen. Dazu existieren verschiedene Möglichkeiten. Insbesondere in der Zuckerherstellung ist es üblich, Zuckerrüben zunächst mechanisch durch Schneiden, Reiben oder Walzen zu bearbeiten. Durch Schnitzelschneidemaschinen werden Zuckerrüben in der Regel zu bleistiftstarken Rübenschnitzeln verarbeitet. Im weiteren Verlauf werden durch einen thermischen Zellaufschluss Inhaltsstoffe extrahiert. Dabei werden die Zellmembranen der Rübenschnitzel durch den Temperatureinfluss denaturiert und die zu gewinnenden Inhaltsstoffe können isoliert werden. Darüber hinaus ist seit einigen Jahrzehnten das Verfahren der Elektroporation bekannt. Durch das Anlegen einer Spannung ist es möglich, die Zellmembranen zu permeabilisieren. Anschließend an die Elektroporation ist so eine Extraktion möglich.

Die DE 101 44 486 C1 beschreibt ein Verfahren zum Aufschluss biologischer Zellen im industriellen Maßstab mit gepulsten elektrischen Feldern. Das beschriebene Verfahren wird durch einen Reaktor verwirklicht, der in eine Prozessstraße integriert ist. Die Prozessgut- beziehungsweise Transportstraße wird im Reaktorbereich von Flüssigkeit durchströmt, um dadurch das biologische Material der Wirkung der gepulsten elektrischen Felder auszusetzen.

Die SU 100 57 58 A beschreibt ein Verfahren der Elektroporation von unter anderem auch Rüben als biologisches Material. In dem beschriebenen Verfahren ist es vorgesehen, dass die Rüben in einem Schneidapparat abwechselnd elektroporiert und darauffolgend geschnitten werden.

Die DE 101 44 479 A1 beschreibt ebenfalls ein Verfahren zur Elektroporation ganzer Rüben. Das Verfahren wird in einem Trommelreaktor durchgeführt. Der Trommelreaktor besteht aus einer wassergefüllten Wanne, in der sich die Trommel drehen kann. Die zu elektroporierenden Rüben werden durch die Trommel über daran befestigte Mitnehmer durch das Wasser gezogen. Zur Elektroporation kommt es durch Elektroden und Gegenelektroden, die sich an dem Wannenboden beziehungsweise an der Trommel befinden.

Neben der Elektroporation ganzer Rüben ist auch die Elektroporation von Rübenschnitzeln bekannt.

Die SU 764 643 beschreibt die Elektroporation von Zuckerrübenschnitzeln. Die Elektroporation erfolgt hierbei durch den Transport der Schnitzel über eine Förderanlage, wobei diese Förderanlage aus einem leitfähigen Band besteht.

Zagorulko (Zagorulko, A. Ya.; Novye Fiz. Metody Obrabotki Pishch. Produktivo, 1958 Vol. 1, 21-27) beschreibt eine Elektroporationsvorrichtung zur Elektroporation von Zuckerrübenschnitzeln. Die Vorrichtung besteht aus zwei geriffelten Rotoren, die sich gegeneinander drehen und die Schnitzel durch einen Spalt von 1 bis 2 mm zwängen, in dem das elektrische Feld wirkt.

Nachteilig an den bisherigen Verfahren ist, dass die beschriebenen Anlagen einen Transport der zu extrahierenden Rüben oder Rübenschnitzeln durch Zwangsförderung über Bänder, Walzen, Fördertrommeln oder Ähnliches vorsehen. Diese Zwangsförderung bewirkt, dass die Rübenschnitzel aufgrund der erheblichen mechanischen Beanspruchung vor der Extraktion brechen und somit in hohem Maße beschädigt werden. Dies wiederum führt zu einer geringeren Effizienz in der nachgeschalteten Extraktion. Wertvolle, zu isolierende Inhaltsstoffe können dadurch verloren gehen.

In Guliy et al. (CITS Proceedings Madrid 2003, Intern. Commission for Sugar Technology, Seiten 303 bis 315, Verlag A. Bartens, 2003) wird eine weitere Möglichkeit beschrieben, um Rübenschnitzel in eine Elektroporationsanlage zu transportieren. Dementsprechend wird ein Gemisch aus Schnitzeln und Flüssigkeit in die Elektroporationsvorrichtung gepumpt. Dies setzt jedoch voraus, dass die Schnitzel weitgehend vereinzelt vorliegen, um eine Blockierung und Verstopfung während des Transports zu verhindern. Nachteilig daran ist, dass auf diese Weise eine hohe Packungsdichte der Rübenschnitzel bei der Elektroporation nicht ermöglicht werden kann. Dies hat entsprechend auch eine geringere Effizienz der Extraktion zur Folge.

Der vorliegenden Erfindung liegt daher das technische Problem zugrunde, ein einfach durchzuführendes, störungs-, insbesondere verblockungsunanfälliges, und verbessertes, insbesondere ein Ausbeute-verbessertes, Verfahren zur Gewinnung von Inhaltsstoffen aus Pflanzenmaterial, besonders bevorzugt zur Elektroporation von Pflanzenmaterial, insbesondere Zuckerrüben beziehungsweise Zuckerrübenschnitzeln bereitzustellen, wobei zum einen eine hohe Packungsdichte des zerkleinerten Pflanzenmaterials, insbesondere der Rübenschnitzel, erreicht und zum anderen eine mechanische Belastung und Beschädigung des zerkleinerten Pflanzenmaterials, insbesondere der Rübenschnitzel, vor der die Inhaltsstoffe freisetzenden Behandlung, insbesondere vor der Elektroporation verhindert wird.

Die vorliegende Erfindung betrifft ein Verfahren zur Extraktion von Inhaltsstoffen aus Pflanzenmaterial, umfassend die Schritte

(a) Zerkleinern des Pflanzenmaterials in eine Festphase ausbildendes zerkleinertes Pflanzenmaterial,

(b) Einmaischen des zerkleinerten Pflanzenmaterials in eine Transportflüssigkeit unter Erhalt einer Fest- und Flüssigphase,

(c) druckfreies Einschwemmen der Fest- und Flüssigphase in eine berührungslos wirkende Reaktionskammer,

(d) Transport der Fest- und Flüssigphase durch die berührungslos wirkende Reaktionskammer bei gleichzeitigem berührungslosem Einwirken von Energie zur Extraktion der Inhaltsstoffe aus dem Pflanzenmaterial, und

(e) Sog-unterstütztes Abführen der die extrahierten Inhaltsstoffe aufweisenden Flüssig- und Festphase, wobei die Flüssigphase mittels eines Saugelements abgesaugt und die Festphase mittels eines mechanisch auf sie einwirkenden Förderelements aus der Reaktionskammer abgeführt wird.

Die vorliegende Erfindung betrifft insbesondere ein Verfahren, wobei die berührungslos wirkende Reaktionskammer eine mechanische Reaktionskammer ist.
In bevorzugter Ausführungsform ist die Reaktionskammer eine elektrische Reaktionskammer.
Im Zusammenhang mit der vorliegenden Erfindung ist eine berührungslos wirkende Reaktionskammer eine Reaktionskammer, in der das zerkleinerte Pflanzenmaterial so Energie ausgesetzt wird, dass Inhaltsstoffe freigesetzt werden, ohne dass mechanisch und physisch auf das Pflanzenmaterial eingewirkt wird, wobei die Energie in bevorzugter Ausführungsform elektrische Energie und/oder Schallenergie, insbesondere Ultraschallenergie ist. Insbesondere wird unter dem Begriff "berührungslos" verstanden, dass das Pflanzenmaterial weder durch mechanische Elemente gepresst, zerdrückt, zerquetscht, zerkleinert oder sonst wie mittels direktem physischem Einwirken von mechanischen Elementen berührt wird, wobei der Kontakt des Pflanzenmaterials zu der Reaktionskammerwand keine Berührung im Sinne der vorliegenden Erfindung darstellt. Im Zusammenhang mit der vorliegenden Erfindung wird unter einer berührungslosen Behandlung oder einem berührungslosen Einwirken also eine Behandlung verstanden, im Rahmen derer eine Freisetzung von Inhaltsstoffen aus Pflanzenmaterial erreicht werden kann, ohne dass ein physischer Kontakt des Pflanzenmaterials mit einem Energie, z. B. Druck- oder Reibungsenergie auf das Pflanzenmaterial abgebenden Element oder Vorrichtung zustande kommt.
Die mechanische Reaktionskammer der vorliegenden Erfindung weist in bevorzugter Ausführungsform eine Vorrichtung zur Abgabe von Schallenergie, insbesondere Ultraschallenergie und/oder Stoßwellen, auf.
Die vorliegende Erfindung betrifft daher auch in einer Ausführungsform ein Verfahren, wobei das berührungslose Einwirken eine Ultraschall- oder Stoßwellenbehandlung ist.
In einer besonders bevorzugten Ausführungsform ist die berührungslos wirkende Reaktionskammer als mechanische Reaktionskammer und elektrische Reaktionskammer ausgeführt, d. h. weist sowohl eine Vorrichtung zur Abgabe von Ultraschall- und/oder Stoßwellenenergie und eine Vorrichtung zur Abgabe von elektrischer Energie auf.
Die vorliegende Erfindung umfasst insbesondere ein Verfahren zur Extraktion von Inhaltsstoffen aus Pflanzenmaterial, umfassend die Schritte

(a) Zerkleinern des Pflanzenmaterials in eine Festphase ausbildendes zerkleinertes Pflanzenmaterial,

(b) Einmaischen des zerkleinerten Pflanzenmaterials in eine Transportflüssigkeit unter Erhalt einer Fest- und Flüssigphase,

(c) druckfreies Einschwemmen der Fest- und Flüssigphase in eine elektrische Reaktionskammer,

(d) Transport der Fest- und Flüssigphase durch die elektrische Reaktionskammer bei gleichzeitigem Durchführen einer Elektrobehandlung zur Extraktion der Inhaltsstoffe aus dem zerkleinerten Pflanzenmaterial, und

(e) Sog-unterstütztes Abführen der die extrahierten Inhaltsstoffe aufweisenden Flüssig- und Festphase, wobei die Flüssigphase mittels eines Saugelements abgesaugt und die Festphase mittels eines mechanisch auf sie einwirkenden Förderelements aus der elektrischen Reaktionskammer abgeführt wird.

Die Erfindung löst das ihr zugrundeliegende technische Problem durch ein Verfahren zur Extraktion von Inhaltsstoffen, insbesondere Zucker, aus Rüben, insbesondere Zuckerrüben, umfassend die Schritte:

(a) Zerkleinern der Rüben, insbesondere Zuckerrüben, in eine Festphase ausbildende Rübenschnitzel,

(b) Einbringen, insbesondere Einmaischen, der Rübenschnitzel in eine Transportflüssigkeit unter Erhalt einer Fest- und Flüssigphase, insbesondere eines Rübenschnitzel-Transportflüssigkeits-Gemisches,

(c) druckfreies Einschwemmen der Fest- und Flüssigphase in eine Elektroporationsvorrichtung,

(d) Transport der Fest- und Flüssigphase durch die Elektroporationsvorrichtung bei gleichzeitigem Durchführen einer Elektroporation zur Extraktion der Inhaltsstoffe aus den Rübenschnitzeln, und

(e) Sog-unterstütztes Abführen der die extrahierten Inhaltsstoffe aufweisenden Flüssig- und Festphase, wobei die Flüssigphase mittels eines Saugelementes abgesaugt und die Festphase mittels eines mechanisch auf sie einwirkenden Förderelementes aus der Elektroporationsvorrichtung abgeführt wird.

In einem ersten Schritt sieht die erfindungsgemäße Verfahrensweise also ein Bereitstellen von Pflanzenmaterial, insbesondere Rüben vor, die zerkleinert werden, insbesondere zu zerkleinertem Pflanzenmaterial, insbesondere Rübenschnitzeln.

Im Folgenden ist die vorliegende Erfindung in einer besonders bevorzugten Ausführungsform beschrieben, nämlich der Extraktion von Inhaltsstoffen aus Pflanzenmaterial mittels einer elektrischen Reaktionskammer und einer darin durchgeführten Elektroporation. Die im Folgenden angegebenen konkreten technischen Lehren betreffen jedoch in im Wesentlichen gleicher Weise auch den Einsatz einer berührungslos wirkenden mechanischen Reaktionskammer und einer darin durchgeführten Behandlung mit Schallwellen, insbesondere Ultraschallenergie und/oder Stoßwellen.

In der folgenden Darstellung der Erfindung wird die Erfindung anhand einer besonders bevorzugten Ausführungsform der Erfindung, nämlich Zuckerrüben und die durch Zerkleinern der Zuckerrüben entstandenen Rübenschnitzel, beschrieben. Die vorliegende Erfindung ist jedoch auch für anderes Pflanzenmaterial, insbesondere stückiges Pflanzenmaterial, z. B. Zuckerrohr, Zichorien, Kartoffel, Karotten, Obst, insbesondere Äpfel, anwendbar, so dass die Beschreibung der Erfindung anhand der Rübe exemplarisch auch für andere stückige Pflanzenmaterialien ist.

Die erfindungsgemäße Vorgehensweise ist daher eine Verfahrensweise, gemäß der die das zerkleinerte Pflanzenmaterial, z. B. Rübenschnitzel, aufweisende Fest- und Flüssigphase im Gleichstrom in die elektrische Reaktionskammer, insbesondere Elektroporationsvorrichtung, eingeschwemmt und durch diese hindurch transportiert werden, wobei die beiden Phasen durch mindestens ein Saugelement und mindestens ein Förderelement aus der elektrischen Reaktionskammer entfernt werden.

In besonders bevorzugter Ausführungsform sind in der elektrischen Reaktionskammer, insbesondere der Elektroporationsvorrichtung, keinerlei Förderelemente vorgesehen, die dem Transport des zerkleinerten Pflanzenmaterials dienen. In besonders bevorzugter Ausführungsform sieht die vorliegende Erfindung vor, lediglich stromabwärts, d. h. hinter der elektrischen Reaktionskammer, insbesondere der Elektroporationsvorrichtung, mindestens ein Förderelement und mindestens ein Saugelement vorzusehen.

In besonders bevorzugter Ausführungsform wird unter einem Pflanzenmaterial insbesondere ein stückiges Pflanzenmaterial verstanden, vorzugsweise Zuckerrüben, Zuckerrohr, Zichorie, Kartoffel, Karotten und Obst, insbesondere Äpfel.

Im Zusammenhang mit der vorliegenden Erfindung wird unter einer elektrischen Reaktionskammer eine Vorrichtung oder ein Teil einer Vorrichtung verstanden, in der elektrische Ströme oder elektrische Felder oder elektrische Ströme und elektrische Felder auf Zielmaterialien, insbesondere die erfindungsgemäß durch die elektrische Reaktionskammer transportierten Fest- und Flüssigphasen wirken. Insbesondere wird im Zusammenhang mit der vorliegenden Erfindung unter einer elektrischen Reaktionskammer eine Elektroporationsvorrichtung verstanden.

Die Erfindung sieht weiter vor, dass die zerkleinerten Pflanzenmaterialien, insbesondere Rübenschnitzel, in eine Transportflüssigkeit, insbesondere einen Rübenextrakt oder Wasser, eingebracht, insbesondere eingemaischt, und danach in eine, vorzugsweise als Rohr- oder Schachtreaktor ausgebildete, elektrische Reaktionskammer, vorzugsweise Elektroporationsvorrichtung, eingeschwemmt werden, sich danach zu einer Pflanzenmaterialpackung, insbesondere Schnitzelpackung, bestimmter Packungsdichte verdichten und in Form dieser erhaltenen Packungsdichte durch die elektrische Reaktionskammer, insbesondere durch den Elektroporationsschacht- oder -rohrreaktor, gefördert und elektrisch behandelt, insbesondere elektroporiert, werden, wobei vorteilhafterweise die Geschwindigkeit des zerkleinerten Pflanzenmaterials, insbesondere die der Rübenschnitzel, ebenso wie die Dichte der Schnitzelpackung durch das Saugelement und das Förderelement gezielt eingestellt werden können. Das Förderelement dient dazu, die elektrobehandelten, insbesondere elektroporierten Materialien, insbesondere Schnitzel, mit definierter Geschwindigkeit zu fördern, während das, vorzugsweise dem Förderelement nachgeschaltete, Saugelement das Gemisch aus zerkleinertem Pflanzenmaterial und Transportflüssigkeit, insbesondere das Rübenschnitzel-Transportflüssigkeits-Gemisch, ansaugt, was in vorteilhafter Weise auch den Effekt mit sich bringt, dass Wasser durch die Schnitzel gesaugt wird. Das Saugelement dient daher dem Ansaugen der Flüssigphase und bestimmt deren Geschwindigkeit, wirkt sich dadurch aber auch auf die Packungsdichte, d.h. Schüttdichte, und Transportgeschwindigkeit der in der Elektroporationsvorrichtung in der Flüssigphase befindlichen mitgeführten Materialien, z. B. Rübenschnitzel, aus. Das Saugelement übt demgemäß einen Sog auf die elektrische Reaktionskammer, insbesondere Elektroporationsvorrichtung, eingeschwemmte Fest- und Flüssigphase aus, der diese beiden Phasen durch die in die elektrische Reaktionskammer, insbesondere Elektroporationsvorrichtung, hindurch bis zumindest zum Saugelement selber transportiert.

In einer besonders bevorzugten Ausführungsform sieht die vorliegende Erfindung vor, dass die Geschwindigkeit des Transports der Festphase durch das mechanisch auf die Festphase einwirkende Förderelement und die Geschwindigkeit des Transports der Flüssigphase durch das Saugelement eingestellt werden, vorzugsweise separat voneinander.

Erfindungsgemäß kann durch das Förderelement die Transportgeschwindigkeit der zerkleinerten Pflanzenmaterialien, insbesondere der Schnitzel, in der elektrischen Reaktionskammer, insbesondere der Elektroporationsvorrichtung, gezielt eingestellt werden. Das Saugelement kann erfindungsgemäß dazu beitragen, die Packungsdichte, d.h. die Schüttdichte, der zerkleinerten Pflanzenmaterialien, insbesondere der Schnitzel, in der elektrischen Reaktionskammer, insbesondere der Elektroporationsvorrichtung, gezielt einzustellen, sodass durch die kombinierte Wirkung beider Elemente eine konstant hohe Packungsdichte im Schacht eingestellt werden kann. Die erfindungsgemäße Vorgehensweise sieht vor, dass eine Zwangsförderung der zerkleinerten Pflanzenmaterialien, insbesondere der Rübenschnitzel, also zum Beispiel über insbesondere mechanisch wirkende Vorrichtungen wie Bänder, Walzen, Druck- und Schubelemente, nicht vor der elektrischen Reaktionskammer, insbesondere der Elektroporationsvorrichtung, stattfindet, sondern allein dahinter, das heißt stromabwärts. In bevorzugter Ausführungsform der vorliegenden Erfindung sieht diese also ein Verfahren vor, in dem keine mechanische Förderung, insbesondere keine mechanischen Förderelemente, hier auch als Zwangsförderung bezeichnet, stromaufwärts, d. h. vor, und in der elektrischen Reaktionskammer angeordnet sind.

Vorteilhafterweise ist diese Art der Förderung besonders schonend, weil die zerkleinerten Pflanzenmaterialien, insbesondere die Rübenschnitzel, insbesondere vor und während der Elektrobehandlung, insbesondere der Elektroporation, keiner zerstörerischen mechanischen Einwirkung ausgesetzt und ständig in einem Wasserbad gefördert werden, sodass nur ein minimaler Grad der Zerstörung auftritt.

Im Zusammenhang mit der vorliegenden Erfindung wird unter einem Sog-unterstützten Abführen der die extrahierten Inhaltsstoffe aufweisenden Flüssig- und Festphase verstanden, dass durch Einsatz des erfindungsgemäß vorgesehenen Saugelementes die Fest- und die Flüssigphase durch die elektrische Reaktionskammer, insbesondere die Elektroporationsvorrichtung, gesaugt werden, wobei in bevorzugter Ausführungsform dadurch eine gezielte Einstellung der Schnitzelpackungsdichte, insbesondere im Zusammenspiel mit dem Transport der Festphase durch das Förderelement, zustande kommt.

Im Zusammenhang mit der vorliegenden Erfindung wird unter einem mechanisch auf die Festphase einwirkenden Förderelement ein Element verstanden, das in der Lage ist, eine Festphase, insbesondere Rübenschnitzel, zu transportieren, und wobei dieser Transport durch ein bewegliches und physisch mit dem Transportgut in Kontakt stehendes Teil des Förderelements bewirkt wird. Förderelemente können zum Beispiel Transportwalzen, Bänder, Schnecken, Trommeln oder dergleichen sein. Diese Elemente werden hier auch als Zwangsförderelemente bezeichnet.

Die vorliegende Erfindung betrifft auch eine Anlage zur Extraktion von Inhaltsstoffen aus Pflanzenmaterial, insbesondere zur Durchführung eines Verfahrens der vorliegenden Erfindung, umfassend mindestens eine Vorrichtung zur Zerkleinerung von Pflanzenmaterial in eine Festphase ausbildendes zerkleinertes Pflanzenmaterial und zum Einbringen des zerkleinerten Pflanzenmaterials in eine Transportflüssigkeit, mindestens eine sich daran anschließende rohrförmige oder schachtartige Vorrichtung zum Transport des erhaltenen Gemischs aus Transportflüssigkeit und zerkleinertem Pflanzenmaterial mit einem Pflanzenmaterialeinleitungsbereich und einem Pflanzenmaterialausleitungsbereich, mindestens eine in der Vorrichtung zum Transport angeordnete berührungslos wirkende Reaktionskammer, mindestens eine stromabwärts zu dem Pflanzenmaterialausleitungsbereich angeordnete Vorrichtung zum Abführen des berührungslos behandelten Gemisches aus zerkleinertem Pflanzenmaterial, wobei in der Vorrichtung zum Abführen mindestens ein zum Abführen des berührungslos behandelten Gemischs aus Transportflüssigkeit und Pflanzenmaterial angeordnetes Förderelement und mindestens ein Saugelement vorhanden sind.

Die vorliegende Erfindung betrifft auch in bevorzugter Ausführungsform eine Anlage, wobei die berührungslos wirkende Reaktionskammer eine mechanische und/oder elektrische Reaktionskammer ist.

Die berührungslos wirkende mechanische Reaktionskammer weist in bevorzugter Ausführungsform eine Vorrichtung zur Abgabe von Ultraschall und/oder Stoßwellen auf.

Das technische Problem der vorliegenden Erfindung wird auch durch eine Anlage zur Extraktion von Inhaltsstoffen aus zerkleinertem Pflanzenmaterial, insbesondere Rübenschnitzeln, gelöst, umfassend mindestens eine Vorrichtung zur Zerkleinerung von Pflanzenmaterial, insbesondere Rüben, in eine Festphase ausbildendes zerkleinertes Pflanzenmaterial, insbesondere Rübenschnitzel, und gegebenenfalls eine Vorrichtung zum Einmaischen des zerkleinerten Pflanzenmaterials, insbesondere der Schnitzel, in eine Transportflüssigkeit, mindestens eine sich daran anschließende, vorzugsweise rohrförmige oder schachtartige, Vorrichtung zum Transport der erhaltenen Fest- und Flüssigphase mit einem stromaufwärts gelegenen Pflanzenmaterialeinleitungsbereich, insbesondere einem Rübenschnitzeleinleitungsbereich, und einem stromabwärts gelegenen Pflanzenmaterialausleitungsbereich, insbesondere einem Rübenschnitzelausleitungsbereich, mindestens eine in der Vorrichtung zum Transport angeordnete elektrische Reaktionskammer, insbesondere Vorrichtung zur Elektroporation, mindestens eine stromabwärts, das heißt hinter oder unter dem Pflanzenmaterialausleitungsbereich, insbesondere Rübenschnitzelausleitungsbereich, gelegene Vorrichtung zum Abführen des elektrisch behandelten Pflanzenmaterials, also des Gemisches aus zerkleinertem Pflanzenmaterial und Transportflüssigkeit, insbesondere des elektroporierten Rübenschnitzel-Transportflüssigkeits-Gemischs, wobei in der Vorrichtung zum Abführen des elektrisch behandelten Pflanzenmaterials, also des Gemisches aus zerkleinertem Pflanzenmaterial und Transportflüssigkeit, insbesondere elektroporierten Rübenschnitzel-Transportflüssigkeits-Gemischs, mindestens ein Förderelement und mindestens ein Saugelement vorhanden sind, und wobei sich in bevorzugter Ausführungsform das Saugelement an das Förderelement anschließt, das heißt dahinter, also stromabwärts, angeordnet ist.

In besonders bevorzugter Ausführungsform arbeiten das Förderelement und das Saugelement im Gleichstrom. In besonders bevorzugter Ausführungsform sind stromaufwärts, d. h. vor, und in der Reaktionskammer, insbesondere der elektrischen Reaktionskammer, keinerlei Förderelemente angeordnet.

Die Erfindung betrifft daher in bevorzugter Ausführung auch eine vorgenannte Anlage, wobei die, vorzugsweise rohrförmige oder schachtartige, Vorrichtung zum Transport der erhaltenen Fest- und Flüssigphase in bevorzugter Ausführungsform aufrecht oder waagerecht positioniert sein kann. In einer weiteren bevorzugten Ausführungsform kann vorgesehen sein, dass in der erfindungsgemäßen Anlage die Vorrichtung zum Abführen des elektrisch behandelten Pflanzenmaterials, also des Gemisches aus zerkleinertem Pflanzenmaterial und Transportflüssigkeit, insbesondere elektroporierten Rübenschnitzel-Transportflüssigkeits-Gemisches, senkrecht oder im Wesentlichen senkrecht zu der rohrförmigen oder schachtartigen Vorrichtung zum Transport angeordnet ist.

Die erfindungsgemäße Vorgehensweise, den Transport des zerkleinerten Pflanzenmaterials, insbesondere der Rübenschnitzel, und der Transportflüssigkeit durch den kombinierten Einsatz eines Förderelementes mit einem Saugelement durchzuführen, ist unter anderem insofern überraschend, als man davon ausgegangen war, dass es durch die entstehende Sogwirkung zu einer Verblockung und Verstopfung innerhalb des Transportweges kommen würde. Bisher wurde daher angenommen, dass ein Transport des zerkleinerten Pflanzenmaterials, insbesondere von Rübenschnitzeln, durch eine Pumpvorrichtung nur mit einer geringen Packungsdichte möglich ist.

Erfindungsgemäß konnte nun gezeigt werden, dass der Transport des zerkleinerten Pflanzenmaterials, insbesondere von Rübenschnitzeln, durch den gemeinsamen Einsatz eines Förderelements und eines Saugelements auch bei sehr hohen Packungsdichten erfolgen kann. Dies wird insbesondere dadurch ermöglicht, dass die Geschwindigkeit des Transports der Festphase des zerkleinerten Pflanzenmaterials, insbesondere der Rübenschnitzel, durch ein mechanisch einwirkendes Förderelement und die Geschwindigkeit des Transports der Flüssigphase des zerkleinerten Pflanzenmaterials, insbesondere der Flüssigphase der Rübenschnitzel, durch ein Saugelement eingestellt werden. Die Einstellung der Geschwindigkeit der Festphase erfolgt also getrennt von der der Flüssigphase. Durch den kombinierten Einsatz von Förder- und Saugelement und die vorzugsweise vorgesehene getrennte Einstellung der Transportgeschwindigkeiten beider Phasen ist es besonders gut möglich, eine Sogwirkung zu erzielen, die zu einem hohen Durchsatz und einer hohen Verdichtung innerhalb der Festphase führt, ohne dass es dadurch zu mechanischen Beschädigungen der Festphase in größerem Ausmaß kommt. Die Erfindung macht sich daher einen weitgehend schonenden Transport der Festphase in einer Flüssigphase, bewirkt durch das Saugelement, kombiniert mit einer mechanisch separat einstellbaren Geschwindigkeits- und Packungsdichtekontrolle der Festphase durch das Förderelement zu Nutze. Eine Zwangsförderung der Festphase findet also erst nach der Elektrobehandlung, insbesondere Elektroporation, statt und wird erfindungsgemäß mit einer Saugwirkung kombiniert. Ohne an die Theorie gebunden zu sein, wird eine hohe Packungsdichte durch die unterschiedlichen physikalischen Eigenschaften der Fest- und der Flüssigphase innerhalb des Gemisches aus zerkleinertem Pflanzenmaterial und Transportflüssigkeit, insbesondere des Rübenschnitzel-Transportflüssigkeits-Gemisches, erreicht.

In einer vorteilhaften bevorzugten Ausgestaltung der Erfindung bewirkt eine schnellere Geschwindigkeit des Transports der Flüssigphase im Vergleich zu der Transportgeschwindigkeit der Festphase eine Sogwirkung. Diese Sogwirkung resultiert in einer erfindungsgemäß besonders bevorzugten vorteilhaften und besonders ausgeprägten Erhöhung der Packungsdichte der Festphase in dem Gemisch aus zerkleinertem Pflanzenmaterial und Transportflüssigkeit, insbesondere dem Rübenschnitzel-Transportflüssigkeits-Gemisch. Durch die Bereitstellung einer hohen Packungsdichte der Festphase des zerkleinerten Pflanzenmaterials, insbesondere der Rübenschnitzel, wird eine besonders effiziente Elektrobehandlung, insbesondere Elektroporation, und nachfolgend auch Extraktion ermöglicht. Die Erfindung stellt daher ein besonders effizientes und kostengünstiges Verfahren und eine Vorrichtung zu dessen Durchführung zur Verfügung.

Die Erfindung sieht in bevorzugter Ausführung vor, dass in einem ersten Verfahrensschritt (a) Zuckerrüben zu Rübenschnitzeln zerkleinert werden. Anschließend werden in einem Verfahrensschritt (b) die Rübenschnitzel in eine Transportflüssigkeit, zum Beispiel einen Extrakt, Rübenextrakt und/oder Wasser eingebracht, insbesondere eingemaischt. Das entstehende Rübenschnitzel-Transportflüssigkeits-Gemisch setzt sich aus einer Festphase, nämlich den Rübenschnitzeln, sowie einer Flüssigphase, nämlich der Transportflüssigkeit, gegebenenfalls mit Rübensaft beziehungsweise -extrakt, zusammen. Im Zusammenhang mit der vorliegenden Erfindung sind unter "Rübenschnitzeln" zerteilte, zum Beispiel bleistiftstarke oder in Scheiben geschnittene Rüben zu verstehen. Erfindungsgemäß bevorzugt ist vorgesehen, Rüben mittels einer Schnitzelschneidemaschine zu Rübenschnitzeln zu verarbeiten.

In dem erfindungsgemäßen Verfahren ist vorgesehen, dass die Fest- und Flüssigphase in Schritt (c) durch druckfreies Einschwemmen in eine Elektroporationsvorrichtung gelangt. Im Zusammenhang mit der vorliegenden Erfindung ist unter einem "druckfreien Einschwemmen" zu verstehen, dass ein Einleiten der Fest- und Flüssigphase in die elektrische Reaktionskammer, insbesondere Elektroporationsvorrichtung, ohne zusätzliche Hilfsmittel, wie einer Zwangsförderung, insbesondere über Förderschnecken, Förderbänder, Fördertrommeln, Walzen oder Ähnliches, stattfindet. Erfindungsgemäß findet eine Zwangsförderung der Festphase nicht vor der Elektrobehandlung, insbesondere Elektroporation, sondern alleine danach statt. Insbesondere ist in bevorzugter Ausführungsform unter einem druckfreien Einschwemmen auch eine Einleitung ohne zusätzliche Pumpen als Hilfsmittel zum Pressen oder Drücken des Transportguts in die elektrische Reaktionskammer, insbesondere Elektroporationsvorrichtung, zu verstehen. Unter einem druckfreien Einschwemmen ist somit vorzugsweise ein, insbesondere auf der Schwerkraft, vorzugsweise alleine auf der Schwerkraft, beruhendes Einbringen von Fest- und Flüssigphase in eine elektrische Reaktionskammer, insbesondere Elektroporationseinrichtung, zu verstehen. Das druckfreie Einbringen kann auch durch entstehende Kapillarkräfte innerhalb der Flüssigphase des Rübenschnitzel-Transportflüssigkeits-Gemischs zustande kommen.

Die Festphase des Rübenschnitzel-Transportflüssigkeits-Gemischs in Schritt (d) des erfindungsgemäßen Verfahrens wird in der Elektroporationsvorrichtung weitertransportiert und gleichzeitig elektroporiert. Die Elektroporation findet unter Einsatz dem Fachmann geläufiger Parameter statt. In besonders bevorzugter Ausführungsform können elektrische Feldimpulse von 0,1 bis 50 kV/cm, vorzugsweise 0,5 bis 40 kV/cm und Impulszahlen von 1 bis 2500, insbesondere 1 bis 1000, vorzugsweise 1 bis 100, besonders bevorzugt 1 bis 50 Impulse/s eingesetzt werden. In einer weiteren besonders bevorzugten Ausführungsform findet die Elektroporation bei Temperaturen von 0 bis 75°C, vorzugsweise 0 bis 45°C, insbesondere 10 bis 35°C statt.

Erfindungsgemäß ist vorgesehen, dass nach der Elektrobehandlung, insbesondere Elektroporation, die Fest- und Flüssigphase des Gemisches aus zerkleinertem Pflanzenmaterial und Transportflüssigkeit, insbesondere Rübenschnitzel-Transportflüssigkeits-Gemisches, die die extrahierten Inhaltsstoffe aufweisen, in Schritt (e) abgeführt werden. Durch ein Förderelement, das mechanisch auf die Festphase einwirkt, wird die Geschwindigkeit des Transports und die Packungsdichte der Festphase eingestellt, wohingegen die Geschwindigkeit des Transports der Flüssigphase durch ein Saugelement eingestellt wird. Insbesondere ist vorgesehen, dass die Geschwindigkeit des Transports von Fest- und Flüssigphase durch das Förder- und Saugelement weitgehend unabhängig voneinander eingestellt werden.

In einer bevorzugten Ausführungsform ist vorgesehen, dass das Förderelement eine Schnecke, vorzugsweise eine Ausziehschnecke, eine Transportschnecke oder ein Förderband ist.

In einer weiteren bevorzugten Ausführungsform ist vorgesehen, dass das Saugelement eine Pumpe, vorzugsweise eine Kreiselpumpe ist.

Erfindungsgemäß ist in bevorzugter Ausführungsform vorgesehen, dass die Geschwindigkeit des Transports der Festphase 30 bis 80 t Rübenschnitzel/h, vorzugsweise 40 bis 70 t Rübenschnitzel/h, insbesondere 45 bis 60 t Rübenschnitzel/h, vorzugsweise 50 t Rübenschnitzel/h beträgt.

In einer bevorzugten Ausführungsform der vorliegenden Erfindung wird diese Geschwindigkeit in einem als Schnecke ausgebildeten Förderelement eingestellt, vorzugsweise mit Drehzahlen bis maximal 500 U/min, bevorzugt von 1 bis 500 U/min, insbesondere von 100 bis 500 U/min, weiter bevorzugt von 200 bis 400 U/min.

In einer besonders bevorzugten Ausführungsform der Erfindung ist vorgesehen, dass eine Packungsdichte der Festphase von 0,5 bis 0,8 g/cm$^3$, vorzugsweise von 0,6 bis 0,7 g/cm$^3$, insbesondere von 0,65 g/cm$^3$ eingestellt wird.

In einer weiteren bevorzugten Ausführungsform ist vorgesehen, das als Pumpe ausgebildete Saugelement mit Drehzahlen von bis zu maximal 1200 U/min zu verwenden. Weiterhin bevorzugt werden Drehzahlen der Pumpe von 750 bis 1200 U/min, vorzugsweise von 800 bis 1100 U/min.

In einer weiteren bevorzugten Ausführungsform ist vorgesehen, dass die Geschwindigkeit des Transports der Flüssigphase höher als die der Festphase ist.

In einer weiteren Ausführungsform ist vorgesehen, dass in den Schritten (a), (b), (c) oder (d) Rohsaft oder Wasser zusätzlich zu der Festphase, des Gemisches aus zerkleinertem Pflanzenmaterial und Transportflüssigkeit, insbesondere des Rübenschnitzel-Saft-Gemischs, hinzugegeben wird.

Ein weiterer Gegenstand der vorliegenden Erfindung ist eine Anlage zur Extraktion von Inhaltsstoffen aus zerkleinertem Pflanzenmaterial, insbesondere Rübenschnitzeln, welche zur Durchführung des erfindungsgemäßen Verfahrens eingesetzt wird. Erfindungsgemäß weist diese Anlage zur Extraktion von Inhaltsstoffen aus zerkleinertem Pflanzenmaterial, insbesondere Rübenschnitzeln, vorzugsweise mindestens eine Vorrichtung zur Zerkleinerung von Pflanzenmaterial, insbesondere Rüben, und zum Einmaischen des zerkleinerten Pflanzenmaterials, insbesondere der Rübenschnitzel, in eine Transportflüssigkeit zum Erhalt eines Gemisches aus zerkleinertem Pflanzenmaterial und Transportflüssigkeit, insbesondere eines Rübenschnitzel-Transportflüssigkeits-Gemisches, mit eine Festphase ausbildenden zerkleinerten Pflanzenmaterialien, insbesondere Rübenschnitzeln, und einer eine Flüssigphase ausbildenden Transportflüssigkeit, mindestens eine sich daran anschließende, vorzugsweise schachtartige oder rohrförmige, insbesondere waagerecht oder aufrecht positionierte, Vorrichtung zum Transport des erhaltenen Gemisches aus zerkleinertem Pflanzen material und Transportflüssigkeit, insbesondere eines Rübenschnitzel-Transportflüssigkeits-Gemisches, mit einem, insbesondere davor oder oben, also stromaufwärts, gelegenen Rübenschnitzeleinleitungsbereich und einem, insbesondere dahinter oder unten, also stromabwärts, gelegenen Pflanzenmaterialeinleitungsbereich, insbesondere Rübenschnitzelausleitungsbereich, mindestens eine in der Vorrichtung zum Transport angeordnete elektrische Reaktionskammer, insbesondere eine Vorrichtung zur Elektroporation, mindestens eine, insbesondere dahinter oder unter, also stromabwärts, zu dem Pflanzenmaterialausleitungsbereich, insbesondere Rübenschnitzelausleitungsbereich, vorzugsweise im Wesentlichen senkrecht zu der rohrförmigen oder schachtartigen Vorrichtung, angeordnete Vorrichtung zum Abführen des elektrisch behandelten Gemisches, insbesondere des elektroporierten Rübenschnitzel-Gemischs, auf, wobei in der Vorrichtung mindestens ein zum Abführen des elektrisch behandelten Pflanzenmaterials, also des Gemisches aus zerkleinertem Pflanzenmaterial und Transportflüssigkeit, insbesondere elektroporierten Rübenschnitzel-Transportflüssigkeits-Gemischs, angeordnetes Förderelement und mindestens ein Saugelement vorhanden sind, und wobei das Saugelement sich vorzugsweise an das Förderelement anschließt.

In erfindungsgemäß bevorzugter Weise kann vorgesehen sein, die genannte Vorrichtung zum Transport des erhaltenen Gemisches, insbesondere des Rübenschnitzel-Transportflüssigkeits-Gemisches, einstückig, das heißt integriert, mit der Vorrichtung zur Elektroporation auszuführen. In einer besonders bevorzugten Ausführungsform ist die elektrische Reaktionskammer, insbesondere Vorrichtung zur Elektroporation, eine rohrförmige oder schachtartige Vorrichtung, insbesondere ein Rohr- oder Schachtreaktor, der sowohl dem Transport des Pflanzenmaterialgemisches, insbesondere des Rübenschnitzel-Transportflüssigkeits-Gemisches, als auch dessen Elektrobehandlung, insbesondere Elektroporation, dient. Es kann allerdings auch vorgesehen sein, eine separate Vorrichtung zum Transport des erhaltenen Gemisches, insbesondere des Rübenschnitzel-Transportflüssigkeits-Gemisches, vorzusehen, welche beispielsweise vor der elektrischen Reaktionskammer, insbesondere Elektroporationsvorrichtung, angeordnet ist oder dahinter, oder davor und dahinter, oder wobei die elektrische Reaktionskammer, insbesondere Elektroporationsvorrichtung, in der Vorrichtung zum Transport positioniert ist.

In bevorzugter Ausführungsform ist vorgesehen, dass sowohl das Saugelement als auch das Förderelement stromabwärts, das heißt hinter beziehungsweise unter der elektrischen Reaktionskammer, insbesondere Elektroporationsvorrichtung, angeordnet sind. Das Saugelement saugt daher die Flüssigphase an und zieht diese durch die Transport- und Elektroporationsvorrichtung. Das mechanisch auf die Festphase einwirkende Förderelement fördert das elektrisch behandelte, insbesondere elektroporierte, weitgehend von interessierenden Inhaltsstoffen befreite Festphasenmaterial von der elektrischen Reaktionskammer, insbesondere Elektroporationsvorrichtung weg.

Erfindungsgemäß wird unter "aufrecht positioniert" eine Aufstellung innerhalb der Anlage verstanden, die senkrecht, bevorzugt im Wesentlichen senkrecht, zur Erdoberfläche ist, auf der die Anlage mittelbar oder unmittelbar aufgebaut ist. Entsprechend ist unter aufrecht positioniert eine Ausrichtung zu verstehen, die sich im Wesentlichen genau entgegen der Erdanziehungskraft erstreckt. Eine "waagerechte" oder "horizontale" Position ist demgemäß senkrecht, bevorzugt im Wesentlichen senkrecht, zu einer aufrechten Position. Erfindungsgemäß wird unter "oben gelegen" eine Position verstanden, die distal zu der Erdoberfläche angeordnet ist. Entsprechend wird unter "unten gelegen" eine Position verstanden, die proximal zu der Erdoberfläche angeordnet ist. Erfindungsgemäß wird unter "im Wesentlichen senkrecht" eine Positionierung verstanden, die einen Winkel von 80° bis 100°, bevorzugt 90° aufweist. Erfindungsgemäß kann unter "im Wesentlichen senkrecht" auch eine horizontale Ausrichtung verstanden werden, nämlich zum Beispiel genau dann, wenn, wie erfindungsgemäß in einer bevorzugten Ausführungsform vorgesehen, die Vorrichtung zum Abführen der Fest- und Flüssigphase im rechten Winkel oder im Wesentlichen senkrecht zu einer senkrecht oder im Wesentlichen senkrecht auf der Erdoberfläche positionierten schachtartigen Vorrichtung zum Transport des erhaltenen Rübenschnitzel-Transportflüssigkeits-Gemisches steht.

In einer bevorzugten Ausführungsform weist die erfindungsgemäße Anlage eine Vorrichtung zum Einspeisen von Rohsaft oder Wasser auf, wobei diese so ausgebildet ist, dass die Einspeisung von Rohsaft oder Wasser in der Vorrichtung zum Transport und/oder in der Vorrichtung zur Elektrobehandlung, insbesondere Elektroporation erfolgen kann.

In einer weiteren bevorzugten Ausführungsform weist die Anlage eine Vorrichtung zum Einschwemmen des Rübenschnitzel-Transportflüssigkeits-Gemischs auf, wobei in einer besonders bevorzugten Ausführungsform die Vorrichtung zum Einschwemmen als Trichter ausgebildet ist.

In einer weiteren bevorzugten Ausführungsform ist die Vorrichtung zum Transport als Schacht ausgebildet. In einer besonders bevorzugten Ausführungsform weist dieser Schacht eine Grundfläche von 30 x 40 cm auf. Die Vorrichtung zum Transport kann auch als Rohr ausgebildet sein.

In einer bevorzugten Ausführungsform der Erfindung weist die Anlage stromabwärts, zum Beispiel dahinter oder unterhalb, des oben gelegen Pflanzenmaterialeinleitungsbereichs, insbesondere des Rübenschnitzeleinleitungsbereichs, und stromaufwärts, zum Beispiel davor oder oberhalb, des unten gelegen Pflanzenmaterialausleitungsbereiches, insbesondere des Rübenschnitzelausleitungsbereichs, eine Vorrichtung zur Elektrobehandlung, insbesondere Elektroporation, auf. Bevorzugt ist vorgesehen, dass die Vorrichtung zur Elektrobehandlung, insbesondere zur Elektroporation als Rohr- oder Schachtreaktor ausgebildet ist.

In einer weiteren bevorzugten Ausführungsform der vorliegenden Erfindung ist das im Wesentlichen senkrecht oder im rechten Winkel zu der Vorrichtung zum Transport angeordnete Förderelement als Schnecke, bevorzugt als Ausziehschnecke, weiter bevorzugt als Transportschnecke, ausgebildet.

In einer weiteren bevorzugten Ausführungsform der vorliegenden Erfindung ist das, vorzugsweise sich an das Förderelement anschließende, Saugelement als Pumpe, bevorzugt als Kreiselpumpe ausgebildet.

Weitere vorteilhafte Ausgestaltungen der Erfindung ergeben sich aus den Unteransprüchen.

Die Erfindung wird anhand des folgenden Beispiels und der dazugehörigen Figur näher erläutert:

Die erfindungsgemäße Vorrichtung wird durch die Figur näher erläutert:

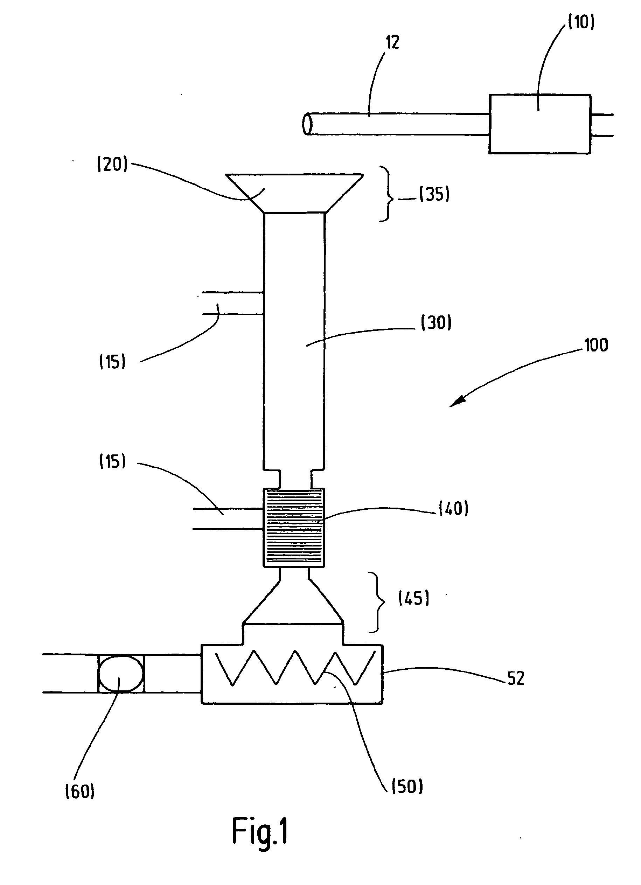

Figur 1     zeigt eine schematische Darstellung einer bevorzugten Ausführungsform der erfindungsgemäßen Vorrichtung.

Figur 2     zeigt die Abhängigkeit der Packungsdichte [kg/l] von der Saugleistung der Pumpe in [U/min].

Figur 3     zeigt die Abhängigkeit der Rübenschnitzel-Durchsatzes in [kg/U] von der Drehzahl der Horizontalschnecke in [U/min].

Figur 4     zeigt einen Vergleich der Rübenschnitzelzerstörung der erfindungsgemäßen Anlage mit einer Vergleichsanlage.

Figur 5     zeigt einen Vergleich der Rübenschnitzelzerstörung der erfindungsgemäßen Anlage mit einer weiteren Vergleichsanlage.

Beispiel

Elektroporation eines verdichteten Rübenschnitzel-Transportflüssigkeits-Gemischs

Die erfindungsgemäße Verfahrensweise stellt sich in der erfindungsgemäßen aufrecht auf der Erdoberfläche positionierten Anlage (100) wie folgt dar:

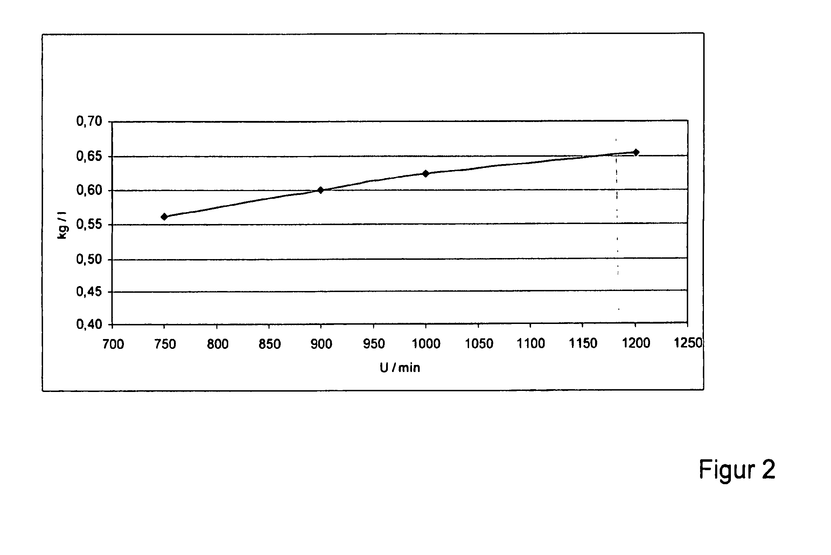

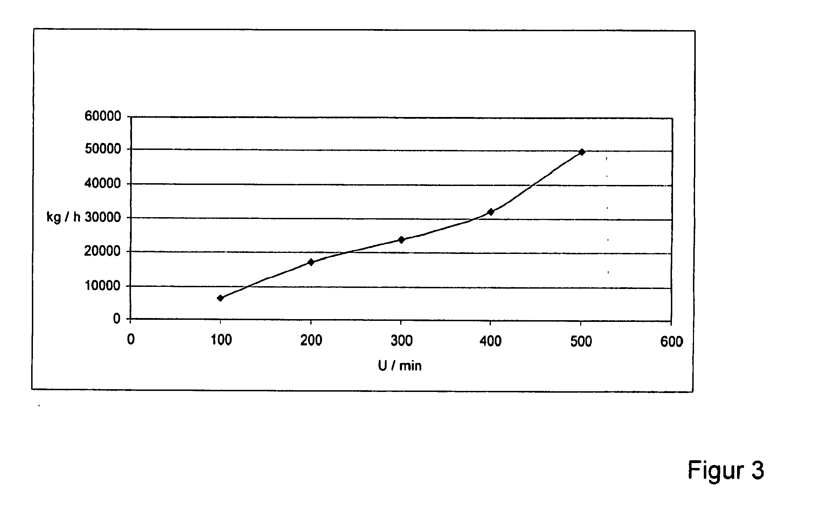

Nicht dargestellte Zuckerrüben werden in einer Vorrichtung zur Zerkleinerung (10) zu Zuckerrübenschnitzeln verarbeitet. Das nach Einmaischen in eine Transportflüssigkeit erhaltene Rübenschnitzel-Transportflüssigkeits-Gemisch kennzeichnet sich zum einen durch eine Festphase ausbildende Rübenschnitzel und zum anderen durch eine Flüssigphase ausbildende Transportflüssigkeit. Das erhaltene Rübenschnitzel-Transportflüssigkeits-Gemisch wird direkt und druckfrei zum Beispiel über ein Förderband (12) durch einen oben gelegenen Rübenschnitzeleinleitungsbereich (35) über einen Trichter (20) in die als Schacht mit den Grundflächenabmessungen 30 x 40 cm ausgeführte Transportvorrichtung (30) der Elektroporationsanlage (100) eingeschwemmt. Durch den Schacht (30) wird das erhaltene Rübenschnitzel-Transportflüssigkeits-Gemisch in einen unterhalb des Schachts (30) gelegenen Elektroporationsreaktor (40) weitertransportiert. Das elektroporierte Rübenschnitzel-Transportflüssigkeits-Gemisch gelangt über einen darunter gelegenen Rübenschnitzelausleitungsbereich (45) zu einer horizontal und senkrecht zu dem Schacht angeordneten Vorrichtung zum Abführen (52). Diese Vorrichtung zum Abführen (52) beinhaltet eine Ausziehschnecke (50) als Förderelement. Die Ausziehschnecke transportiert die Rübenschnitzel ab und bestimmt die Transportgeschwindigkeit der Festphase, also der Rübenschnitzel, des Rübenschnitzel-Transportflüssigkeits-Gemischs durch den Schacht (30) und im Elektroporationsreaktor (40) (vergleiche Figur 3). Die an das Förderelement anschließende Kreiselpumpe (60) saugt die Flüssig- und Festphase durch den Schacht (30) und den Elektroporationsreaktor (40), führt die Flüssigphase ab und bestimmt die Schüttdichte im Schacht (Figur 2). Die Kreiselpumpe (60) ist so eingestellt, dass die Flüssigphase schneller als die Festphase transportiert wird, was eine Sogwirkung auslöst.

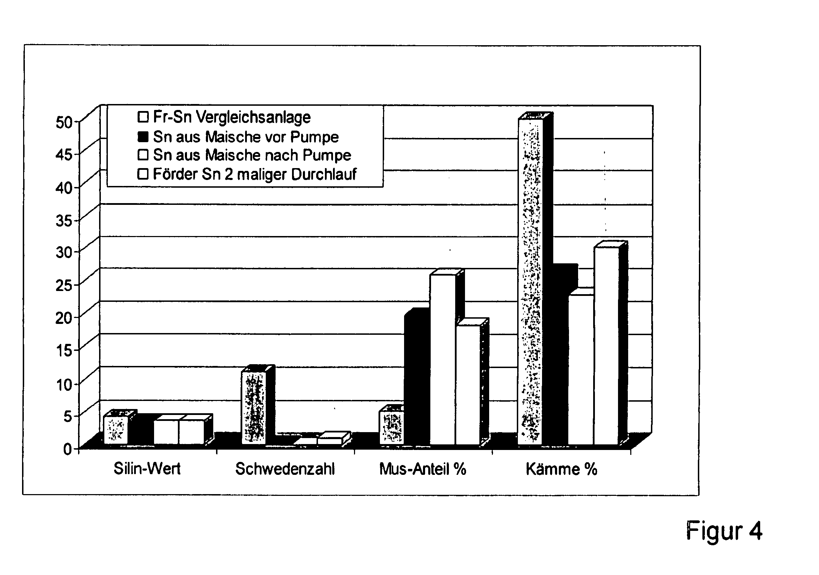

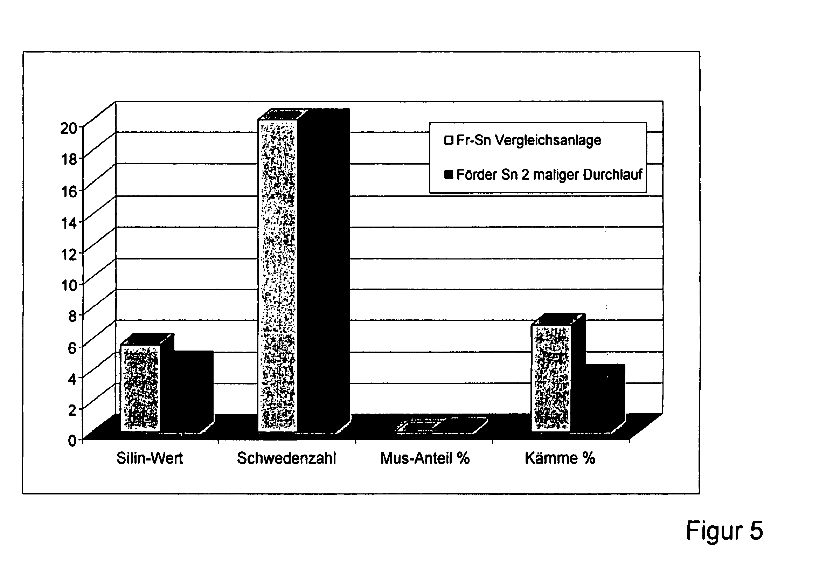

Durch das Zusammenwirken der Ausziehschnecke mit der Kreiselpumpe wird eine Transportgeschwindigkeit der Festphase von 50 t/h bei Drehzahlen der Ausziehschnecke von 100 bis 500 U/min eingestellt. Es wird so eine Packungsdichte der Festphase des Rübenschnitzel-Saft-Gemischs von 0,65 $g/cm^3$ erreicht. Weiterhin wird die Packungsdichte der Festphase durch eine Einstellung der Kreiselpumpe auf Drehzahlen bis maximal 1200 U/min eingestellt (Figuren 2 und 3). Eine Untersuchung der mechanischen Belastung der Rübenschnitzel zeigt, dass diese im Vergleich zu herkömmlichen Anlagen gleich oder sogar geringer zerstört werden (Figuren 4 und 5).

Die in den Figuren 4 und 5 untersuchten Parameter Silin-Wert, Schwedenzahl, Mus-Anteil und Kämme sind Parameter, die die Schnitzelqualität charakterisieren und bestimmen sich wie folgt: Zur Bestimmung der Schnitzelqualität entnimmt man einer Durchschnittsprobe ca. 100 g und sortiert in Schnitzel über 5 cm Länge (Masse $m_1$), zwischen 1 und 5 cm Länge (Masse $m_2$) und unter 1 cm Länge (Masse $m_3$). Ergebnis:

Schwedische Wertzahl:

$$\frac{m_1}{m_3}$$

Mus-Anteil in %:

$$100 \cdot \frac{m_3}{m_1 + m_2 + m_3}$$

Der in den Figuren 4 und 5 verwendete Begriff Schwedenzahl bedeutet schwedische Wertzahl. Die Schwedische Wertzahl ist ein Maß für die Saftdurchlässigkeit der Schnitzel; sie sollte größer als 10 sein. Der Mus-Anteil sollte 5 % nicht übersteigen. 100 g musfreie Schnitzel werden auf einem Rillenbrett (Länge 1 m) aneinandergereiht. Die Gesamtlänge der Schnitzel in m wird abgelesen.

Ergebnis: Silin-Wert: Länge von 100 g Schnitzel in m

Der Silin-Wert charakterisiert die Feinheit beziehungsweise Oberfläche der Schnitzel. Die angestrebten Werte hängen von der Extraktionsanlage ab; für Extraktionstürme liegen sie meist im Bereich von 8 bis 10 m je 100 g. Werden sehr grobe Schnitzel geschnitten und enthalten sie einen Anteil an "Kämmen", so wird vielfach auch dieser ermittelt: Die "Kämme" werden aus 1 kg gut gemischten Schnitzeln ausgelesen und gewogen. Das Ergebnis wird in % angegeben. Als "Kämme" werden die Rübenscheiben bezeichnet, die von der Rübe abgeschnitten werden, wenn das Schneidwerkzeug zu grob eingestellt ist.

Die Bezeichnungen Fr-Sn, Sn und Förder Sn bedeuten Folgendes: Fr-Sn steht für frische Schnitzel, das sind frisch geschnittene Rübenschnitzel, die direkt nach dem Schneidvorgang genommen wurden. Sn steht für Rübenschnitzel, die im konventionellen Prozess die Extraktionsanlage abschnittsweise passiert haben. Es handelt sich in dem konkreten Beispiel um Rübenschnitzel, die in der Extraktionsmaische vorbehandelt wurden und somit sowohl auf thermischem Wege denaturiert wurden als auch mechanische Veränderungen erlitten haben. Förder Sn (Förderschnitzel) steht für frisch geschnittene Rübenschnitzel, die nach der Entnahme aus dem Prozess in der Förderapparatur für eine bestimmte Zeit im Kreislauf bewegt wurden und sich auf diesem Wege verändert haben. Sie sind zu einem gewissen Grad mechanisch verändert, das heißt zerkleinert worden und sind deshalb im Durchschnitt kürzer geworden. Durch die Ermittlung der o.g. Schnitzelkennzahlen für die frisch geschnittenen Schnitzel, die Schnitzel aus der Extraktionsmaische und die Förderschnitzel kann jeweils der Grad der Schnitzelzerstörung beziehungsweise -veränderung beschrieben werden.

Die Figuren 4 und 5 zeigen, wie sich die Förderung in der erfindungsgemäßen Anlage auf die mechanische Stabilität und die äußere Form der Schnitzel auswirkt. Die Figur 4 zeigt dies am Beispiel von Schnitzeln, die grob geschnitten sind und deshalb auch viele Scheiben, so genannte Kämme, aufweisen. Figur 5 zeigt dies an Schnitzeln, die sorgfältig geschnitten sind und deshalb nur sehr wenige Kämme aufweisen. Dargestellt ist jeweils, wie sich in der erfindungsgemäßen Anlage die Schnitzelform bei überproportionaler mechanischer Belastung, das heißt bei im zeitlichen Durchschnitt zweimaligem Durchlauf, gegenüber dem Urzustand verändert hat. Die Figur 4 zeigt zudem, wie sich die Form der Schnitzel durch die mechanische Behandlung in einer Vergleichsanlage (Fr-Sn Vergleichsanlage) verändert hat. Dabei bezeichnen die Probenahmestellen "Schnitzel und Maische vor Pumpe" (Sn aus Maische vor Pumpe) und Schnitzel aus Maische nach Pumpe" (Sn aus Maische nach Pumpe) die jeweiligen Probenahmen aus der Vergleichsanlage nach dem Durchlauf durch den Behälter für die thermische Denaturierung der Schnitzel vor und nach der Pumpe, die das Rübenschnitzel-Transportflüssigkeits-Gemisch unmittelbar in die Extraktionsanlage fördert.

Aus Figur 4 geht hervor, dass die Form der Schnitzel in der erfindungsgemäßen Anlage trotz der überproportionalen mechanischen Belastung sogar weniger beeinträchtigt wird als durch die Vorbehandlung in der Vergleichsanlage. Der Musanteil, das heißt der Anteil an kleinen Schnitzelteilchen, ist geringer und die so genannte "Schwedenzahl", die das Verhältnis von großen, unzerstörten Schnitzeln zu den kleinen durch Schnitzelzerstörung erzeugten Schnitzelteilchen angibt, ist höher.

Aus Figur 5 geht hervor, dass auch bei sorgfältig geschnittenen Rübenschnitzeln mit einem geringen Anteil an Kämmen der Grad der Veränderung der Form der Schnitzel bei einer überproportionalen mechanischen Belastung (zweimaliger Durchlauf) gering ist. Dies zeigt insbesondere der äußerst geringe Anteil an Mus, der bei der Förderung der Schnitzel in der erfindungsgemäßen Anlage aufgetreten ist.

Die Figuren 4 und 5 belegen somit, dass die Förderung der Rübenschnitzel in der erfindungsgemäßen Anlage sehr schonend verläuft und dies sogar gegenüber dem Stand der Technik eine Verbesserung bedeutet.

In der erfindungsgemäßen Anlage zeigt sich darüber hinaus auch nach längeren Laufzeiten keine Verblockung durch Rübenschnitzel im Schacht.

**Patentansprüche**

1. Verfahren zur Extraktion von Inhaltsstoffen aus Pflanzenmaterial, umfassend die Schritte

    (a) Zerkleinern des Pflanzenmaterials in eine Festphase ausbildendes zerkleinertes Pflanzenmaterial,

(b) Einmaischen des zerkleinerten Pflanzenmaterials in eine Transportflüssigkeit unter Erhalt einer Fest- und Flüssigphase,

(c) druckfreies Einschwemmen der Fest- und Flüssigphase in eine Reaktionskammer,

(d) Transport der Fest- und Flüssigphase durch die Reaktionskammer bei gleichzeitigem berührungslosem Einwirken von Energie zur Extraktion der Inhaltsstoffe aus dem Pflanzenmaterial, und

(e) Sog-unterstütztes Abführen der die extrahierten Inhaltsstoffe aufweisenden Flüssig- und Festphase, wobei die Flüssigphase mittels eines Saugelements abgesaugt und die Festphase mittels eines mechanisch auf sie einwirkenden Förderelements aus der Reaktionskammer abgeführt wird.

2. Verfahren nach Anspruch 1, wobei die Reaktionskammer eine berührungslos wirkende mechanische oder elektrische Reaktionskammer ist.

3. Verfahren nach Anspruch 1 oder 2, wobei das berührungslose Einwirken eine Ultraschall- oder Stoßwellenbehandlung ist.

4. Verfahren zur Extraktion von Inhaltsstoffen aus Pflanzenmaterial, insbesondere nach Anspruch 1, umfassend die Schritte

(a) Zerkleinern des Pflanzenmaterials in eine Festphase ausbildendes zerkleinertes Pflanzenmaterial,

(b) Einmaischen des zerkleinerten Pflanzenmaterials in eine Transportflüssigkeit unter Erhalt einer Fest- und Flüssigphase,

(c) druckfreies Einschwemmen der Fest- und Flüssigphase in eine elektrische Reaktionskammer,

(d) Transport der Fest- und Flüssigphase durch die elektrische Reaktionskammer bei gleichzeitigem Durchführen einer Elektrobehandlung zur Extraktion der Inhaltsstoffe aus dem zerkleinerten Pflanzenmaterial, und

(e) Sog-unterstütztes Abführen der die extrahierten Inhaltsstoffe aufweisenden Flüssig- und Festphase, wobei die Flüssigphase mittels eines Saugelements abgesaugt und die Festphase mittels eines mechanisch auf sie einwirkenden Förderelements aus der elektrischen Reaktionskammer abgeführt wird.

5. Verfahren nach einem der Ansprüche 1 bis 4, wobei das Pflanzenmaterial Zuckerrüben, Zuckerrohr, Zichorien, Kartoffeln, Äpfel oder Karotten sind.

6. Verfahren nach einem der Ansprüche 4 bis 5, wobei die elektrische Reaktionskammer eine Elektroporationsvorrichtung ist.

7. Verfahren nach einem der Ansprüche 1 bis 6, wobei die berührungslos wirkende Reaktionskammer eine elektrische und eine mechanische Reaktionskammer ist.

8. Verfahren nach einem der vorhergehenden Ansprüche, wobei die Geschwindigkeit des Transports der Festphase durch das mechanisch auf die Festphase einwirkende Förderelement und die der Flüssigphase durch das Saugelement eingestellt werden.

9. Verfahren nach einem der vorhergehenden Ansprüche, wobei die Geschwindigkeit des Transports der Flüssigphase höher als die der Festphase ist.

10. Verfahren nach einem der vorhergehenden Ansprüche, wobei in Schritt (a), (b), (c) oder (d) Rohsaft oder Wasser zu der Festphase zugegeben wird.

11. Anlage zur Extraktion von Inhaltsstoffen aus Pflanzenmaterial, insbesondere zur Durchführung eines Verfahrens gemäß einem der Ansprüche 1 bis 10, umfassend mindestens eine Vorrichtung zur Zerkleinerung von Pflanzenmaterial (10) in eine Festphase ausbildendes zerkleinertes Pflanzenmaterial und zum Einbringen des zerkleinerten Pflanzenmaterials in eine Transportflüssigkeit, mindestens eine sich daran anschließende rohrförmige oder schachtartige Vorrichtung zum Transport (30) des erhaltenen Gemischs aus Transportflüssigkeit und zerkleinertem Pflanzenmaterial mit einem Pflanzenmaterialeinleitungsbereich (35) und einem Pflanzenmaterialausleitungsbereich (45), mindestens eine in der Vorrichtung zum Transport angeordnete berührungslos wirkende Reaktionskammer (40), mindestens eine stromabwärts zu dem Pflanzenmaterialausleitungsbereich (45) angeordnete Vorrichtung zum Abführen (52) des berührungslos behandelten Gemisches aus zerkleinertem Pflanzenmaterial, wobei in der Vorrichtung zum Abführen (52) mindestens ein zum Abführen des berührungslos behandelten Gemischs aus Transportflüssigkeit und Pflanzenmaterial angeordnetes Förderelement (50) und mindestens ein Saugelement (60) vorhanden sind.

12. Anlage nach Anspruch 11, wobei die berührungslos wirkende Reaktionskammer (40) eine elektrische Reaktionskammer (40) und das berührungslos behandelte Gemisch ein elektrobehandeltes Gemisch ist.

13. Anlage nach einem der Ansprüche 11 oder 12, wobei die Anlage eine Vorrichtung zum Einspeisen von Rohsaft oder Wasser (15) aufweist.

14. Anlage nach einem der Ansprüche 11 bis 13, wobei die berührungslos wirkende Reaktionskammer eine mechanische und elektrische Reaktionskammer ist.

15. Anlage nach einem der Ansprüche 12 bis 14, wobei die elektrische Reaktionskammer als Vorrichtung zur Elektroporation (40) ausgeführt ist.

16. Anlage nach einem der Ansprüche 11 bis 15, wobei das in der Vorrichtung zum Abführen horizontal angeordnete Förderelement (50) als Schnecke, vorzugsweise als Auszieh- oder Transportschnecke ausgebildet ist.

**Claims**

1. Process for the extraction of contents from plant material, comprising the steps of

   (a) comminuting the plant material into comminuted plant material forming a solid phase,
   (b) mashing the comminuted plant material into a transporting liquid while obtaining a solid phase and a liquid phase,
   (c) pressurelessly washing the solid and liquid phases into a reaction chamber,
   (d) transporting the solid and liquid phases through the reaction chamber with simultaneous contactless application of energy for the extraction of the contents from the plant material, and
   (e) suction-assisted discharging of the liquid and solid phases comprising the extracted contents, the liquid phase being sucked away by means of a sucking element and the solid phase being discharged from the reaction chamber by means of a conveying element acting mechanically on it.

2. Process according to claim 1, the reaction chamber being a contactlessly operating mechanical or electrical reaction chamber.

3. Process according to claim 1 or 2, the contactless action being an ultrasound or shock-wave treatment.

4. Process for the extraction of contents from plant material, in particular according to claim 1, comprising the steps of

   (a) comminuting the plant material into comminuted plant material forming a solid phase,
   (b) mashing the comminuted plant material into a transporting liquid while obtaining a solid phase and a liquid phase,
   (c) pressurelessly washing the solid and liquid phases into an electrical reaction chamber,
   (d) transporting the solid and liquid phases through the electrical reaction chamber while simultaneously carrying out an electrical treatment for the extraction of the contents from the comminuted plant material, and
   (e) suction-assisted discharging of the liquid and solid phases comprising the extracted contents, the liquid phase being sucked away by means of a sucking element and the solid phase being discharged from the electrical reaction chamber by means of a conveying element acting mechanically on it.

5. Process according to one of claims 1 to 4, the plant material being sugar beets, sugar cane, chicories, potatoes, apples or carrots.

6. Process according to one of claims 4 to 5, the electrical reaction chamber being an electroporation device.

7. Process according to one of claims 1 to 6, the contactlessly operating reaction chamber being an electrical reaction chamber and a mechanical reaction chamber.

8. Process according to one of the preceding claims, the speed of the transport of the solid phase being set by the conveying element acting mechanically on the solid phase and that of the liquid phase being set by the sucking element.

9. Process according to one of the preceding claims, the speed of the transport of the liquid phase being higher than that of the solid phase.

10. Process according to one of the preceding claims, raw juice or water being added to the solid phase in step (a), (b), (c) or (d).

11. Installation for the extraction of contents from plant material, in particular for carrying out a process according to one of claims 1 to 10, comprising at least one device (10) for comminuting plant material into comminuted plant material forming a solid phase and for introducing the comminuted plant material into a transporting liquid, at least one following tubular or shaft-like device (30) for transporting the obtained mixture of transporting liquid and comminuted plant material with a plant-material introducing region (35) and a plant-material removing region (45), at least one contactlessly operating reaction chamber (40) arranged in the transporting device, at least one device (52) arranged downstream of the plant-material removing region (45) for discharging the contactlessly treated mixture of comminuted plant material, there being in the discharging device (52) at least one conveying element (50), arranged for discharging the contactlessly treated mixture of transporting liquid and plant material, and at least one sucking element (60).

12. Installation according to claim 11, the contactlessly operating reaction chamber (40) being an electrical reaction chamber (40) and the contactlessly treated mixture being an electrically treated mixture.

13. Installation according to one of claims 11 or 12, the installation having a device (15) for feeding in raw juice or water.

14. Installation according to one of claims 11 to 13, the contactlessly operating reaction chamber being a mechanical and electrical reaction chamber.

15. Installation according to one of claims 12 to 14, the electrical reaction chamber being configured as a device for electroporation (40).

16. Installation according to one of claims 11 to 15, the conveying element (50) arranged horizontally in the discharging device being formed as a worm, preferably as a drawing-out or transporting worm.

**Revendications**

1. Procédé d'extraction d'ingrédients de matière végétale, comprenant les étapes

   (a) réduction de la matière végétale en une matière végétale réduite formant une phase solide,
   (b) foulage de la matière végétale réduite dans un fluide de transport avec obtention d'une phase solide et liquide,
   (c) submersion sans pression de la phase solide et liquide dans une chambre réactionnelle,
   (d) transport de la phase solide et liquide à travers la chambre réactionnelle avec action simultanée sans contact d'énergie en vue de l'extraction des ingrédients de la matière végétale, et
   (e) évacuation assistée par aspiration de la phase liquide et solide présentant les ingrédients extraits, dans lequel la phase liquide est aspirée au moyen d'un élément aspirant et la phase solide est évacuée de la chambre réactionnelle au moyen d'un élément de transport agissant mécaniquement sur elle.

2. Procédé selon la revendication 1, dans lequel la chambre réactionnelle est une chambre réactionnelle mécanique ou électrique agissant sans contact.

3. Procédé selon la revendication 1 ou 2, dans lequel l'action sans contact est un traitement aux ultrasons ou aux ondes de choc.

4. Procédé d'extraction d'ingrédients de matière végétale, notamment selon la revendication 1, comprenant les étapes

   (a) réduction de la matière végétale en une matière végétale réduite formant une phase solide,
   (b) foulage de la matière végétale réduite dans un fluide de transport avec obtention d'une phase solide et liquide,
   (c) submersion sans pression de la phase solide et liquide dans une chambre réactionnelle électrique,
   (d) transport de la phase solide et liquide à travers la chambre réactionnelle électrique avec réalisation simultanée d'un traitement électrique en vue de l'extraction des ingrédients de la matière végétale réduite, et
   (e) évacuation assistée par aspiration de la phase liquide et solide présentant les ingrédients extraits, dans lequel la phase liquide est aspirée au moyen d'un élément aspirant et la phase solide est évacuée de la chambre réactionnelle électrique au moyen d'un élément de transport agissant mécaniquement sur elle.

5. Procédé selon l'une quelconque des revendications 1 à 4, dans lequel la matière végétale est des betteraves à sucre, de la canne à sucre, des chicorées, des pommes de terre, des pommes ou des carottes.

6. Procédé selon l'une quelconque des revendications 4 à 5, dans lequel la chambre réactionnelle électrique est un dispositif d'électroporation.

7. Procédé selon l'une quelconque des revendications 1 à 6, dans lequel la chambre réactionnelle agissant sans contact est une chambre réactionnelle électrique et une chambre réactionnelle mécanique.

8. Procédé selon l'une quelconque des revendications précédentes, dans lequel la vitesse de transport de la phase solide est réglée par l'élément de transport agissant mécaniquement sur la phase solide et celle de la phase liquide est réglée par l'élément aspirant.

9. Procédé selon l'une quelconque des revendications précédentes, dans lequel la vitesse de transport de la phase liquide est supérieure à celle de la phase solide.

10. Procédé selon l'une quelconque des revendications précédentes, dans lequel du jus brut ou de l'eau est ajouté à la phase solide à l'étape (a), (b), (c) ou (d).

11. Installation d'extraction d'ingrédients de matière végétale, notamment pour la réalisation d'un procédé selon l'une quelconque des revendications 1 à 10, comprenant au moins un dispositif pour la réduction de la matière végétale (10) en une matière végétale réduite formant une phase solide et pour l'introduction de la matière végétale réduite dans un fluide de transport, au moins un dispositif tubulaire ou de type cuve se raccordant à celui-ci pour le transport (30) du mélange obtenu à partir du fluide de transport et de la matière végétale réduite avec une région d'introduction de matière végétale (35) et une région de diversion de matière végétale (45), au moins une chambre réactionnelle (40) agissant sans contact, disposée dans le dispositif de transport, au moins un dispositif disposé en aval de la région de diversion de matière végétale (45) pour l'évacuation (52) du mélange traité sans contact constitué de matière végétale réduite, dans laquelle au moins un élément de transport (50) disposé pour l'évacuation du mélange traité sans contact constitué du fluide de transport et de la matière végétale et au moins un élément aspirant (60) sont présents dans le dispositif pour l'évacuation (52).

12. Installation selon la revendication 11, dans laquelle la chambre réactionnelle agissant sans contact (40) est une chambre réactionnelle électrique (40) et le mélange traité sans contact est un mélange traité électriquement.

13. Installation selon l'une quelconque des revendications 11 ou 12, dans laquelle l'installation présente un dispositif pour l'alimentation de jus brut ou d'eau (15).

14. Installation selon l'une quelconque des revendications 11 à 13, dans laquelle la chambre réactionnelle agissant sans contact est une chambre réactionnelle mécanique et électrique.

15. Installation selon l'une quelconque des revendications 12 à 14, dans laquelle la chambre réactionnelle électrique est réalisée en tant que dispositif pour l'électroporation (40).

16. Installation selon l'une quelconque des revendications 11 à 15, dans laquelle l'élément de transport (50) disposé horizontalement dans le dispositif pour l'évacuation est réalisé en tant qu'hélice, de préférence en tant qu'hélice d'extraction ou de transport.

Fig.1

Figur 2

Figur 3

Figur 4

Legend:
- ☐ Fr-Sn Vergleichsanlage
- ■ Sn aus Maische vor Pumpe
- ☐ Sn aus Maische nach Pumpe
- ☐ Förder Sn 2 maliger Durchlauf

X-axis categories: Silin-Wert, Schwedenzahl, Mus-Anteil %, Kämme %

Y-axis: 0, 5, 10, 15, 20, 25, 30, 35, 40, 45, 50

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144486 C1
- SU 1005758 A
- DE 10144479 A1
- SU 764643

**In der Beschreibung aufgeführte Nicht-Patentliteratur**

- **ZAGORULKO, A. YA.** *Novye Fiz. Metody Obrabotki Pishch. Produktivo,* 1958, vol. 1, 21-27
- CITS Proceedings Madrid 2003. **GULIY et al.** Intern. Commission for Sugar Technology. Verlag A. Bartens, 2003, 303-315